(19) Europäisches Patentamt
European Patent Office
Office européen des brevets

(11) **EP 3 440 909 B1**

(12) **EUROPÄISCHE PATENTSCHRIFT**

(45) Veröffentlichungstag und Bekanntmachung des Hinweises auf die Patenterteilung:
**29.04.2020   Patentblatt 2020/18**

(51) Int Cl.:
**A01C 7/08** (2006.01)          **A01C 7/10** (2006.01)

(21) Anmeldenummer: **18401068.4**

(22) Anmeldetag: **01.08.2018**

(54) **VERFAHREN UND SYSTEM ZUM DOSIEREN VON SAATGUT IN EINER SÄMASCHINE**

METHOD AND SYSTEM FOR DOSING SEEDS IN A SEEDER

PROCÉDÉ ET SYSTÈME DE DOSAGE DE SEMENCE DANS UN SEMOIR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.08.2017   DE 102017117973**

(43) Veröffentlichungstag der Anmeldung:
**13.02.2019   Patentblatt 2019/07**

(73) Patentinhaber: **Amazonen-Werke H. Dreyer GmbH & Co. KG 49205 Hasbergen (DE)**

(72) Erfinder:
• **Johannaber, Stefan Jan 49536 Lienen (DE)**
• **Wiebusch, Thorsten 49205 Hasbergen (DE)**
• **Teckemeyer, Stephan 49504 Lotte (DE)**
• **Meyer, Lars 49733 Haren/Ems (DE)**

(56) Entgegenhaltungen:
**EP-A1- 3 150 041      EP-A1- 3 150 043 EP-A2- 2 281 426      DE-A1- 10 350 542**

EP 3 440 909 B1

**Beschreibung**

Die Erfindung betrifft ein Verfahren und ein System zum Dosieren von Saatgut in einer Sämaschine gemäß den Oberbegriffen der Ansprüche 1 und 7 sowie eine Sämaschine mit dem System.

Gattungsgemäße Verfahren und Systeme basieren auf einem zentralen Vorratsbehälter und einem zentralen Nursing-Behälter, in dem Saatgut pneumatisch auf Förderleitungen verteilt und in daran angeschlossenen dezentralen Säaggregaten vereinzelt und dosiert wird. Derartige Systeme sind beispielsweise in EP 3 150 041A1, EP 2 281 426 A2, EP 3 150 043A1 oder DE 103 00 542 A1 offenbart.

Bei bestimmten Qualitäten und Mischungen von Saatgut und/oder bei geringen Ausbringmengen hat es sich als problematisch erwiesen, die dezentrale Dosierung durch Vereinzelung mittels einer Vereinzelungsscheibe vorzunehmen. Beispielsweise können Fehlstellen oder Doppelbelegungen an den Vereinzelungsscheiben zu Dosierungsfehlern führen.

Es besteht daher der Bedarf für alternative Verfahren und Vorrichtungen zur Dosierung von Saatgut auf der Grundlage von Nursing-Systemen. Insbesondere wünschenswert ist eine einfache Umrüstung ausgehend vom herkömmlichen Nursing-Betrieb, also dem zentralen Nachliefern des Saatguts je nach Bedarf der dezentral vereinzelnden Säaggregate, hin zu einer Dosierung ohne dezentrale Vereinzelung des Saatguts in den Säaggregaten mit dennoch ausreichend gleichmäßiger Querverteilung des Saatguts im Arbeitsbetrieb.

Die gestellte Aufgabe wird mit einem Verfahren gemäß Anspruch 1 gelöst. Demnach dient dieses zum Dosieren zum Saatgut in einer Sämaschine. Das Saatgut wird aus einem zentralen Vorratsbehälter in einen Nursing-Behälter insbesondere mittels Schwerkraftförderung nachgefüllt und dort pneumatisch auf mehrere Förderleitungen zu dezentralen Säaggregaten verteilt. Erfindungsgemäß werden ein Ist-Füllstand und/oder eine Ist-Fließgeschwindigkeit des Saatguts im Nursing-Behälter eingangsseitig überwacht. Ferner wird das Saatgut durch die Säaggregate in Abhängigkeit von dem Ist-Füllstand und/oder der Ist-Fließgeschwindigkeit gefördert.

Die dezentrale Dosierung des Saatguts im Bereich der Säaggregate erfordert dann keine dezentrale Vereinzelung des Saatguts, sondern kann in Abhängigkeit von dem zentralen Ist-Füllstand und/oder der zentralen Ist-Fließgeschwindigkeit des Saatguts im Nursing-Behälter mittels Veränderung der dezentralen Fließgeschwindigkeit des Saatguts bzw. der Antriebsdrehzahl der Säaggregate geregelt werden.

Hierzu wird beispielsweise ein geeigneter Sollbereich des zentralen Füllstands und/oder der zentralen Fließgeschwindigkeit festgelegt. Die Ausbringmenge/-rate der Säaggregate wird dann laufend so angepasst, dass der zentrale Ist-Füllstand und/oder die zentrale Ist-Fließgeschwindigkeit innerhalb des jeweiligen Sollbereichs bleiben.

Ergänzend oder alternativ wird die dezentrale Ausbringmenge/-rate der Säaggregate bei einem Überschreiten oder Unterschreiten festgelegter Grenzwerte des zentralen Füllstands und/oder der zentralen Fließgeschwindigkeit wenigstens so lange gegenläufig korrigiert, bis der zentrale Ist-Füllstand bzw. die zentrale Ist-Fließgeschwindigkeit wieder innerhalb der Grenzwerte liegt.

Somit lässt sich die tatsächliche Ausbringmenge bei einem Nursing-System ohne dezentrale Vereinzelung des Saatguts maschinell steuern.

Vorzugsweise wird die Fließgeschwindigkeit des Saatguts durch die Säaggregate erhöht, falls ein vorgegebener Höchstfüllstand des Saatguts im Nursing-Behälter überschritten wird, und/oder falls eine vorgegebene Mindestfließgeschwindigkeit und/oder ein entsprechender Gesamtmassenstrom des Saatguts durch den Nursing-Behälter unterschritten werden. Entsprechend wird die Fließgeschwindigkeit des Saatguts durch die Säaggregate gesenkt, falls ein vorgegebener Mindestfüllstand des Saatguts im Nursing-Behälter unterschritten wird, und/oder falls eine vorgegebene Höchstfließgeschwindigkeit und/oder ein entsprechender Gesamtmassenstrom des Saatguts durch den Nursing-Behälter überschritten werden. Dies ermöglicht eine vergleichsweise einfache Regelung der Ausbringmenge an den Säaggregaten auf der Basis einer zentralen Überwachung des Füllstands und/oder der Fließgeschwindigkeit des Saatguts.

Vorzugsweise wird ein eingangsseitiger Soll-Gesamtvolumenstrom und/oder Soll-Gesamtmassenstrom des Saatguts für den Nursing-Behälter maschinell eingestellt und insbesondere konstant gehalten. Zu diesem Zweck ist beispielsweise ein zentraler Volumendosierer zwischen dem zentralen Vorratsbehälter und dem Nursing-Behälter vorhanden. Ändert sich dann der Füllstand im Nursing-Behälter, so entspricht die dezentral ausgebrachte Saatgutmenge nicht der eingangsseitigen Vorgabe. Folglich können Fördermenge/-rate und/oder Fließgeschwindigkeit des Saatguts an den dezentralen Säaggregate maschinell und insbesondere automatisch korrigiert werden.

Vorzugsweise werden dann Steuersignale zur Drehzahlanpassung der Säaggregate mittels insbesondere kapazitiver Füllstandüberwachung einer Saatgutsäule im Nursing-Behälter auf wenigstens zwei unterschiedlichen Füllstandniveaus erzeugt.

Dies ermöglicht ein besonders einfaches Vordosieren des Saatguts im Bereich des Nursing-Behälters wie folgt. Das zentrale Dosierungsaggregat fördert das Saatgut mit einer fest eingestellten Volumenrate in den Nursing-Behälter. Dort wird das Saatgut auf die Förderleitungen zu den dezentralen Säaggregaten pneumatisch verteilt. Da die Volumenrate durch die einzelnen Säaggregate schwierig zu bestimmen ist, wird der Füllstand des Saatguts zwischen dem zentralen Dosierungsaggregat und dem pneumatischen Verteilungsbereich des Nursing-Systems überwacht.

Ist dieser Füllstand im Nursing-Behälter konstant, so entspricht die dezentral ausgebrachte Saatgutmenge exakt der vom zentralen Dosierungsaggregat zugeführten Saatgutmenge. Das System arbeitet dann in seinem Soll-Zustand. Sinkt demgegenüber dieser Füllstand im Nursing-Behälter unter einen vorgegeben Mindestfüllstand, so wird das Saatgut dezentral zu schnell ausgebracht und die Dosierung an den dezentralen Säaggregaten reduziert, insbesondere durch Reduzierung ihrer Antriebsdrehzahl. Umgekehrtes gilt bei einem Ansteigen des Füllstands über einen vorgegebenen Höchstfüllstand. Eine besonders einfache Regelung ergibt sich bei Einsatz von zwei separaten Füllstandsensoren zur Überwachung des Mindestfüllstands und des Höchstfüllstands im Nursing-System.

Bei einer weiteren vorteilhaften Ausführungsform des Verfahrens werden Steuersignale zur Drehzahlanpassung der Säaggregate auf der Grundlage der Schüttdichte des Saatguts, des Förderquerschnitts im Überwachungsbereich der Ist-Fließgeschwindigkeit und der gemessenen Ist-Fließgeschwindigkeit erzeugt. Eine zentrale Volumendosierung des Saatguts zwischen zentralem Vorratsbehälter und Nursing-Behälter ist dann entbehrlich. Je nach Fördermenge kann dann die Fließgeschwindigkeit einer im Nursing-Behälter stehenden Saatgutsäule mittels Radarsensor oder dergleichen überwacht werden.

Vorzugsweise wird ein Zusammenhang zwischen der Fließgeschwindigkeit v und dem Massenstrom $\dot{m}$ des Saatguts mittels einer Abdrehprobe ermittelt, und Steuersignale zur Drehzahlanpassung der Säaggregate werden anhand dieses Zusammenhangs und der Ist-Fließgeschwindigkeit erzeugt. Für die Drehzahlanpassung der Säaggregate muss die Schüttdichte des Saatguts dann nicht bekannt sein. Stattdessen lässt man bei der Abdrehprobe auf bekannte Weise über einen Schieber das Saatgut aus dem Nursing-Behälter auslaufen. Aus der gewogenen Auslaufmenge $m$, der gestoppten Auslaufzeit t und der mittleren vom Radarsensor dabei ermittelten Fließgeschwindigkeit $\bar{v}$ lässt sich der Zusammenhang wie folgt bestimmen:

$$\dot{m}(v) = v \cdot m / (\bar{v} \cdot t) \qquad (A)$$

Ist die Schüttdichte $\rho Sch$ des Saatguts dagegen bekannt, beispielsweise nachdem diese separat ermittelt wurde, lässt sich mit Hilfe der vom Radarsensor gemessenen Ist-Fließgeschwindigkeit $v$ und aus dem bekannten Querschnitt $A$ der Förderkanals im Überwachungsbereich der Gesamtmassenstrom $\dot{m}$ wie folgt berechnen:

$$\dot{m}(v) = v \cdot A \cdot \rho Sch \qquad (B)$$

Die gestellte Aufgabe wird ebenso mit einem System gemäß Anspruch 7 gelöst. Demnach dient dieses zum Dosieren von Saatgut in einer Sämaschine und um umfasst einen zentralen Vorratsbehälter für das Saatgut, dezentrale Säaggregate zum Ausbringen des Saatguts und einen zentralen Nursing-Behälter mit einem eingangsseitigen Nachfüllbereich für das Saatgut und einem ausgangsseitigen Verteilungsbereich zum pneumatischen Verteilen des Saatguts auf zu den Säaggregaten führende Förderleitungen.

Erfindungsgemäß umfasst das System wenigstens einen Sensor zum Überwachen eines Ist-Füllstands und/oder einer Ist-Fließgeschwindigkeit des Saatguts im Nachfüllbereich des Nursing-Behälters sowie eine Steuerung zum dezentralen Dosieren des Saatguts, insbesondere Einstellen seiner Fließgeschwindigkeit durch die Säaggregate, in Abhängigkeit von dem Ist-Füllstand / der Ist-Fließgeschwindigkeit. Damit lassen sich die bezüglich des Anspruchs 1 genannten Vorteile erzielen.

Vorzugsweise ist der Nachfüllbereich als Fallrohr und/oder zur Schwerkraftförderung des Saatguts ausgebildet. Dies vereinfacht das Ausbilden einer Saatgutsäule im Nachfüllbereich des Nursing-Behälters und eine dortige Überwachung des Füllstands und/oder der Fließgeschwindigkeit des Saatguts.

Vorzugsweise umfasst das System ferner eine Druckluftzufuhr / ein Gebläse zum Erzeugen eines Förderluftstroms für das Saatgut im Verteilungsbereich und in den Förderleitungen. Der Förderluftstrom wird dann in den Verteilungsbereich des Nursing-Behälters geleitet, um das aus dem Nachfüllbereich rieselnde Saatgut mitzureißen und gleichzeitig auf die Förderleitungen zu verteilen.

Vorzugsweise umfasst das System ferner ein dem Nursing-Behälter voran geschaltetes zentrales Dosierungsaggregat zum Einstellen eines Soll-Gesamtvolumenstroms und/oder Soll-Gesamtmassenstroms des Saatguts. Das zentrale Dosierungsaggregat wird dann vorzugsweise auf einen konstanten Sollwert eingestellt, so dass Änderungen des Ist-Füllstands der Saatgutsäule prinzipiell auf eine nicht ordnungsgemäße dezentrale Dosierung hinweisen. Beim Überschreiten eines Höchstfüllstands und beim Unterschreiten eines Mindestfüllstands kann die dezentrale Dosierung dann gegenläufig korrigiert werden.

Vorzugsweise sind am Nursing-Behälter zwei insbesondere kapazitive Füllstandssensoren zur Überwachungen unterschiedlicher Füllstandniveaus im Nachfüllbereich angeordnet. Veränderungen des Füllstands im Nachfüllbereich lassen sich dann durch einfachen Vergleich des Vorhandenseins / Nichtvorhandenseins von Saatgut an den beiden Füllstandniveaus während des laufenden Arbeitsbetriebs überwachen.

Vorzugsweise ist die Steuerung dazu ausgebildet, Drehzahlen der Säaggregate beim Unterschreiten eines vorgegebenen Mindestfüllstands im Nachfüllbereich zu senken und beim Überschreiten eines vorgegebenen Höchstfüllstands im Nachfüllbereich zu erhöhen. Die Steuerung kann dann auf einfache Weise anhand einer Überwachung von zwei digitalen Zuständen, nämlich Saatgut im Bereich des jeweiligen Füllstandsensors vorhanden oder nicht vorhanden, überwacht werden. Die entsprechende Korrektur der Drehzahlen kann dann iterativ erfolgen. Das heißt, die Drehzahlanpassung berücksichtigt vorherige Drehzahlkorrekturen und wird mit jeder Korrektur feiner. Das System passt sich somit mit jeder Korrektur genauer an den vorgegebenen Soll-Gesamtvolumenstrom und/oder Soll-Gesamtmassenstrom an.

Bei einer weiteren vorteilhaften Ausführungsform des Systems ist am Nursing-Behälter wenigstens ein Radarsensor zur Messung der Ist-Fließgeschwindigkeit des Saatguts im Nachfüllbereich angeordnet. Ein zentrales Dosierungsaggregat zwischen Vorratsbehälter und Nursing-Behälter ist dann entbehrlich. Der Nachfüllbereich des Nursing-Behälters hat dann einen konstruktionsbedingt vorgegebenen Querschnitt geeigneter Größe, sodass man aus der gemessenen Ist-Fließgeschwindigkeit einen Ist-Gesamtmassenstrom und/oder einen Ist-Gesamtvolumenstrom des Saatguts ermitteln kann.

Vorzugsweise ist die Steuerung dazu ausgebildet, Drehzahlen der Säaggregate beim Unterschreiten einer vorgegebenen Mindestfließgeschwindigkeit im Nachfüllbereich zu erhöhen und beim Überschreiten einer vorgegebenen Höchstfließgeschwindigkeit im Nachfüllbereich zu senken. Dadurch lässt sich die tatsächliche dezentrale ausgebrachte Saatgutmenge in einem von der Mindestfließgeschwindigkeit und der Höchstgeschwindigkeit vorgegebenen Sollbereich halten.

Die gestellte Aufgabe wird ebenso mit einer Sämaschine gelöst, die den Säaggregaten zugeordnete Säscharen sowie das System gemäß wenigstens einer der oben genannten Ausführungsformen umfasst. Saatgut unterschiedlicher Qualität und/oder Mischungen und/oder vergleichsweise geringe Ausbringmengen lassen sich dann auch ohne dezentrale Vereinzelung genau mit gleichmäßiger Querverteilung ausbringen.

Bevorzugte Ausführungsformen der Erfindung sind zeichnerisch dargestellt. Es zeigen:

Fig. 1     eine erste bevorzugte Ausführungsform der Erfindung; und

Fig. 2     eine zweite bevorzugte Ausführungsform der Erfindung.

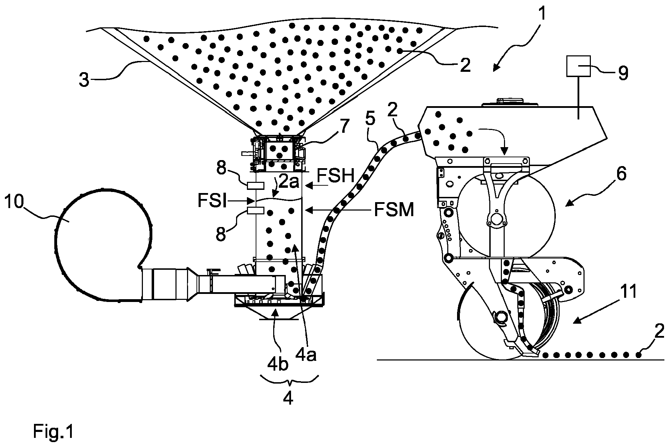

Wie die Fig. 1 erkennen lässt, umfasst das System 1 zum Dosieren von Saatgut 2 in einer Sämaschine gemäß einer ersten Ausführungsform einen zentralen Vorratsbehälter 3 und einen zentralen Nursing-Behälter 4 für das Saatgut 2. Der Nursing-Behälter 4 umfasst einen eingangsseitigen Nachfüllbereich 4a, beispielsweise in Form eines Fallrohrs, und einen ausgangsseitigen Verteilungsbereich 4b. Im Nachfüllbereich 4a liegt das Saatgut als Saatgutsäule 2a vor und wird im Wesentlichen durch die Schwerkraft zum Verteilungsbereich 4b gefördert. Dort wird das Saatgut pneumatisch auf Förderleitungen 5 zu Säaggregaten 6 (jeweils nur einmal dargestellt) verteilt.

Die Säaggregate 6 arbeiten beim erfindungsgemäßen Verfahren nicht vereinzelnd, könnten aber prinzipiell dazu geeignet sein. Denkbar ist beispielsweise, dass Vereinzelungsscheiben der Säaggregate 6 gezielt umgangen oder beispielsweise durch Homogenisierungsscheiben ersetzt werden, um möglichst kontinuierliche und gleichmäßige Saatgutströme zu erzeugen.

Zwischen dem Vorratsbehälter 3 und dem Nursing-Behälter 4 ist ein zentrales Dosierungsaggregat 7 zum Einstellen eines eingangsseitigen Soll-Gesamtvolumenstroms und/oder Soll-Gesamtmassenstroms des Saatguts 2 vorhanden.

Im Nachfüllbereich 4a des Nursing-Behälters 4, also zwischen zentralem Dosierungsaggregat 7 und Verteilungsbereich 4b, sind Füllstandsensoren 8 zur Überwachung von wenigstens zwei unterschiedlichen Füllstandniveaus angeordnet. Die Füllstandniveaus umfassen insbesondere einen Mindestfüllstand FSM und einen Höchstfüllstand FSH einer Saatgutsäule 2a im Nachfüllbereich 4a. Mit Hilfe der Füllstandsensoren 8 wird überwacht, ob der Ist-Füllstand FSI des Saatguts 2 zwischen Mindestfüllstand FSM und Höchstfüllstand FSH liegt.

Die Sensoren 8 überwachen, ob auf ihrem jeweiligen Füllstandniveau Saatgut 2 vorhanden ist. Ist Saatgut 2 vorhanden, so wird beispielsweise ein erster digitaler Zustand ausgegeben. Ist auf dem jeweiligen Füllstandniveau FSM, FSH kein Saatgut 2 vorhanden, so wird beispielsweise ein zweiter digitaler Zustand ausgegeben. Stattdessen könnten selbstverständlich auch andere charakteristische Zustände von den Sensoren 8 ausgegeben werden, wie beispielsweise unterschiedliche Spannungsniveaus oder dergleichen.

Unter Vorgabe eines eingangsseitigen mittleren Soll-Volumenstroms oder Soll-Massenstroms durch das zentrale Dosierungsaggregat 7 kann dann festgestellt werden, ob die dezentralen Säaggregate 6 das Saatgut 2 insgesamt schneller oder langsamer ausbringen als es von dem zentralen Dosierungsaggregat 7 nachgeliefert wird.

Bringen die dezentralen Säaggregate 6 das Saatgut 2 demgegenüber zu schnell aus, wird ihre jeweilige Antriebsdrehzahl von einer Steuerung 9 gesenkt und umgekehrt. Die Steuerung 9 arbeitet dann abhängig von den Zuständen der Sensoren 8 beispielsweise wie folgt:

Ermitteln beide Sensoren 8 den ersten Zustand (Saatgut 2 vorhanden), so wird der Ist-Füllstand FSI im Nachfüllbereich 4a als zu hoch bewertet und die Ausbringmenge der dezentralen Säaggregate 6 als zu niedrig. Entsprechend erhalten die dezentralen Säaggregate 6 von der Steuerung 9 Steuersignale zur Erhöhung ihrer Antriebsdrehzahl.

Ermittelt der untere Sensor 8 den ersten Zustand (Saatgut 2 vorhanden) und der obere Sensor 8 den zweiten Zustand (Saatgut 2 nicht vorhanden), so wird ein korrekter Ist-Füllstand FSI im Nachfüllbereich 4a und eine korrekte Ausbringmenge der Säaggregate 6 angenommen und deren Antriebsdrehzahl daher nicht verändert.

Ermitteln beide Sensoren 8 den zweiten Zustand (Saatgut 2 nicht vorhanden), so wird der Ist-Füllstand FSI im Nachfüllbereich 4a als zu niedrig bewertet und die Ausbringmenge der dezentralen Säaggregate 6 als zu hoch. Entsprechend erhalten die dezentralen Säaggregate 6 von der Steuerung 9 Steuersignale zur Senkung ihrer Antriebsdrehzahl.

Der Vollständigkeit halber sind in der Fig. 1 ferner an sich bekannte Bestandteile des Nursing-Systems 1 schematisch angedeutet, nämlich ein Gebläse 10 zum Zufördern eines Luftstroms in den Verteilungsbereich 4b und der Bereich einer Säschar 11 zum Ausbringen des von dem jeweils zugeordneten Säaggregat 6 abgegebenen Saatguts 2.

Mit dem System 1 zum Dosieren von Saatgut 2 in einer Sämaschine kann gemäß der ersten Ausführungsform beispielsweise wie folgt gearbeitet werden.

Das zentrale Dosierungsaggregat 7 wird anfangs auf bekannte Weise abgedreht und so eingestellt, so dass es im Arbeitsbetrieb einen zur Fahrgeschwindigkeit und zu der pro Feldfläche benötigten Ausbringmenge passenden Soll-Gesamtmassenstrom des Saatguts 2 liefert.

Die Sensoren 8 messen vorzugsweise kapazitiv deren Bedämpfung durch Saatgut 2 und geben laufend den ersten Zustand (Saatgut 2 vorhanden) oder den zweiten Zustand (Saatgut 2 nicht vorhanden) an die Steuerung 9 aus.

Nach der Abdrehprobe wird das System 1 gefüllt und vordosiert. Hierbei läuft das Gebläse 10 bei ausgeschalteten Säaggregaten 6, so dass das zentrale Dosierungsaggregat 7 wenigstens so lange Saatgut 2 in den Nursing-Behälter 4 liefert, bis der untere Sensor 8 den ersten Zustand ausgibt, also Saatgut 2 bis zum Mindestfüllstand FSM im Nachfüllbereich 4a in Form einer Saatgutsäule 2a vorhanden ist.

In diesem Fall sind auch an den dezentralen Säaggregaten 6 vorhandene Zwischenspeicher für das Saatgut 2 gefüllt und der Ist-Füllstand FSI des Saatguts 2 ist innerhalb seines Sollbereichs, beispielsweise an dessen unterem Ende, in dessen Mitte oder dazwischen. Das anfängliche Füllen und Vordosieren des Systems 1 kann aber auch bis zu einem beliebigen Ist-Füllstand FSI unterhalb des Höchstfüllstands FSH fortgesetzt werden.

Im Arbeitsbetrieb der Sämaschine wird zunächst zum Soll-Volumenstrom oder Soll-Massenstrom durch das zentrale Dosierungsaggregat 7 passende Arbeitsdrehzahl der Säaggregate 6 von der Steuerung 9 vorgegeben und danach in Abhängigkeit von den von den Sensoren 8 laufend ausgegebenen Zuständen (Saatgut 2 vorhanden oder nicht vorhanden) und dem davon abgeleiteten Ist-Füllstand FSI gemäß obigem Schema nachgeregelt.

Dadurch wird die von den dezentralen Säaggregaten 6 insgesamt abgegebene Saatgutmenge an die jeweils vom zentralen Dosierungsaggregat 7 in den Nursing-Behälter 4 gelieferte Saatgutmenge im Arbeitsbetrieb angeglichen.

Bei einem Unterschreiten des Mindestfüllstands FSM oder Überschreiten des Höchstfüllstands FSH wird eine gegenläufige Korrektur der dezentralen Ausbringmenge vorgenommen, indem die Antriebsdrehzahl der Säaggregate 6 entsprechend geändert wird.

Diese Korrektur lässt sich im laufenden Arbeitsbetrieb mehrfach wiederholen, wobei das Ausmaß der Drehzahländerung dann sukzessive reduziert werden kann. Dadurch wird die tatsächlich ausgebrachte Saatgutmenge schrittweise an die vom zentralen Dosierungsaggregat 7 vorgegebene Saatgutmenge angenähert.

Somit kalibriert sich das System 1 während des Arbeitsbetriebs automatisch von selbst. Dadurch wird die tatsächlich pro Feldfläche ausgebrachte Saatgutmenge mit zunehmender Dauer des Arbeitsbetriebs immer genauer an ihren Sollwert angeglichen. Es ist lediglich die Antriebsdrehzahl der Säaggregate 6 in Abhängigkeit von den gemessenen Zuständen der Sensoren 8 gezielt zu verändern.

Zu diesem Zweck kann in der Steuerung 9 ein geeigneter Zusammenhang zwischen der Antriebsdrehzahl der Säaggregate 6 und der jeweiligen Ausbringmenge des Saatguts 2 im Sinne einer Arbeitskurve hinterlegt werden. Diese ist selbstverständlich für unterschiedliche Saatgüter 2 in Form unterschiedlicher Zusammenhänge, Tabellen, Algorithmen oder dergleichen hinterlegbar und wird vor dem Arbeitsbetrieb von der Steuerung 9 gezielt abgerufen.

Somit ist ein automatischer und selbstkalibrierender Arbeitsbetrieb des Systems 1 und der zugehörigen Sämaschine auch saatgutspezifisch möglich.

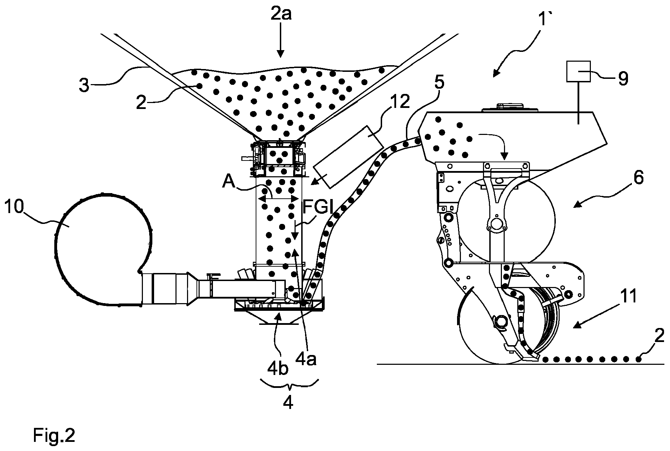

Die Fig. 2 verdeutlicht die Arbeitsweise des Systems 1' zum Dosieren von Saatgut 2 in einer Sämaschine gemäß einer zweiten Ausführungsform, die sich vom voranstehend beschriebenen System 1 im Wesentlichen dadurch unterscheidet, dass das zentrale Dosierungsaggregat 7 entbehrlich bzw. nicht vorhanden ist und an Stelle der kapazitiven Sensoren 8 zur Füllstandüberwachung wenigstens ein Sensor 12 zur Radarüberwachung einer zentralen Ist-Fließgeschwindigkeit FGI des Saatguts 2 im Nachfüllbereich 4a vorhanden ist. Auch in diesem Fall liegt das Saatgut 2 vorzugsweise als Saatgutsäule 2a im Nachfüllbereich 4a vor.

Bei beiden Ausführungsformen im Wesentlichen identisch arbeitende Bestandteile der Systeme 1, 1' sind mit denselben Bezugszeichen bezeichnet und nachfolgend nicht nochmals hinsichtlich Struktur und/oder Funktion erläutert.

Zur einfachen Auswertung der Radarmessung der zentralen Ist-Fließgeschwindigkeit FGI weist der Nachfüllbereich 4a im Bereich des Radarsensors 12 einen geeigneten Förderquerschnitt mit einer bekannten Fläche A auf.

Die durch den Nachfüllbereich 4a zentral zugelieferte Saatgutmenge lässt sich dann anhand der (eingangs genannten) Formeln (A) oder (B) laufend aus der Ist-Fließgeschwindigkeit FGI berechnen, um die Antriebsdrehzahl der Sääggregate 6 in Abhängigkeit von einem Vergleich zwischen der zentralen Ist-Fließgeschwindigkeit FGI und wenigstens einer vorgegebenen zentralen Soll-Fließgeschwindigkeit bzw. durch Vergleich entsprechender Gesamtmassenströme zu regeln.

Beispielsweise wird laufend überprüft, ob die Ist-Fließgeschwindigkeit FGI eine vorgegebene Mindestfließgeschwindigkeit unterschreitet oder eine vorgegebene Höchstfließgeschwindigkeit überschreitet. Bei einer Überschreitung der Höchstfließgeschwindigkeit gibt die Steuerung 9 Steuersignale aus, so dass die Sääggregate 6 anschließend lang-samer fördern / drehen. Bei einer Unterschreitung der Mindestfließgeschwindigkeit werden Steuersignale ausgegeben, so dass die Sääggregate 6 anschließend schneller fördern / drehen.

Abdrehproben mit Radarmessung der zentralen Ist-Fließgeschwindigkeit FGI durch den Nachfüllbereich 4a lässt sich auf an sich bekannte Weise im Vorfeld des Arbeitsbetriebs durchführen.

Entsprechende Arbeitskurven oder dergleichen Zusammenhänge können wie bei der ersten Ausführungsform beispielsweise in Form von Tabellen und/oder Algorithmen spezifisch für das jeweils auszubringende Saatgut 2 zentral in der Steuerung 9 abgelegt oder anderweitig abgefragt werden.

Somit ermöglicht das System 1, 1' in beiden Ausführungsformen eine flexible und für unterschiedliche Saatgutqualitäten und/oder Saatgutmischungen und/oder Ausbringmengen flexibel anpassbare und mit guter Querverteilung einstellbare Ausbringung von Saatgut ohne dezentrale Vereinzelung des Saatguts und einer darauf basierenden dezentralen Dosierung.

## Patentansprüche

1. Verfahren zum Dosieren von Saatgut (2) in einem System nach einem der Ansprüche 7 bis 14, wobei das Saatgut (2) aus einem zentralen Vorratsbehälter (3) in einen Nursing-Behälter (4) insbesondere mittels Schwerkraftförderung nachgefüllt und dort pneumatisch auf mehrere Förderleitungen (5) zu dezentralen Sääggregaten (6) verteilt wird, **dadurch gekennzeichnet, dass** ein Ist-Füllstand (FSI) und/oder eine Ist-Fließgeschwindigkeit (FGI) des Saatguts (2) im Nursing-Behälter (4) eingangsseitig überwacht wird, und das Saatgut (2) durch die Sääggregate (6) in Ab-hängigkeit von dem Ist-Füllstand (FSI) und/oder der Ist-Fließgeschwindigkeit (FGI) gefördert wird.

2. Verfahren nach Anspruch 1, wobei:

   - die Fließgeschwindigkeit des Saatguts (2) durch die Sääggregate (6) erhöht wird, falls ein vorgegebener Höchstfüllstand (FSH) des Saatguts (2) im Nursing-Behälter (4) überschritten wird, und/oder falls eine vorgegebene Mindestfließgeschwindigkeit des Saatguts (2) und/oder ein entsprechender Gesamtmassenstrom des Saatguts (2) durch den Nursing-Behälter (4) unterschritten wird; und
   - die Fließgeschwindigkeit des Saatguts (2) durch die Sääggregate (6) gesenkt wird, falls ein vorgegebener Mindestfüllstand (FSM) des Saatguts (2) im Nursing-Behälter (4) unterschritten wird, und/oder falls eine vorgegebene Höchstfließgeschwindigkeit des Saatguts (2) und/oder ein entsprechender Gesamtmassenstrom des Saatguts (2) durch den Nursing-Behälter überschritten wird.

3. Verfahren nach Anspruch 1 oder 2, wobei ein eingangsseitiger Soll-Gesamtvolumenstrom und/oder Soll-Gesamtmassenstrom des Saatguts (2) in den Nursing-Behälter (4) eingestellt und insbesondere konstant gehalten wird.

4. Verfahren nach Anspruch 3, wobei Steuersignale zur Drehzahlanpassung der Sääggregate (6) auf der Grundlage einer insbesondere kapazitiven Füllstandüberwachung einer Saatgutsäule (2a) im Nursing-Behälter (4) auf wenigstens zwei unterschiedlichen Füllstandniveaus erzeugt werden.

5. Verfahren nach Anspruch 1 oder 2, wobei Steuersignale zur Drehzahlanpassung der Sääggregate (6) auf der Grundlage der Schüttdichte des Saatguts (2), einer Förderquerschnittsfläche (A) im Überwachungsbereich und der Ist-Fließgeschwindigkeit (FGI) erzeugt werden.

6. Verfahren nach Verfahren nach Anspruch 1 oder 2, wobei ein Zusammenhang zwischen Fließgeschwindigkeit und Massenstrom des Saatguts (2) mittels einer Abdrehprobe ermittelt wird und Steuersignale zur Drehzahlanpassung der Sääggregate (6) anhand dieses Zusammenhangs und der Ist-Fließgeschwindigkeit (FGI) erzeugt werden.

**7.** System (1, 1') zum Dosieren von Saatgut (2) in einer Sämaschine, mit einem zentralen Vorratsbehälter (3) für das Saatgut (2) und dezentralen Säaggregaten (6) zum Ausbringen des Saatguts (2), und mit einem zentralen Nursing-Behälter (4) mit einem eingangsseitigen Nachfüllbereich (4a) für das Saatgut (2) und einem ausgangsseitigen Verteilungsbereich (4b) zum pneumatischen Verteilen des Saatguts (2) auf zu den Säaggregaten (6) führende Förderleitungen (5), und wenigstens einen Sensor (8, 12) zum Überwachen eines Ist-Füllstands (FSI) und/oder einer Ist-Fließgeschwindigkeit (FGI) des Saatguts (2) im Nachfüllbereich (4a), **gekennzeichnet durch** eine Steuerung (9) konfiguriert zum dezentralen Dosieren des Saatguts (2), insbesondere Einstellen seiner Fließgeschwindigkeit durch die Säaggregate (6), in Abhängigkeit von dem Ist-Füllstand (FSI) / der Ist-Fließgeschwindigkeit (FGI).

**8.** System nach Anspruch 7, wobei der Nachfüllbereich (4a) als Fallrohr und/oder zur Schwerkraftförderung des Saatguts (2) ausgebildet ist.

**9.** System nach Anspruch 7 oder 8, ferner mit einem Gebläse (10) zum Erzeugen eines Förderluftstroms für das Saatgut (2) im Verteilungsbereich (4b) und in den Förderleitungen (5).

**10.** System nach einem der Ansprüche 7 bis 9, ferner mit einem dem Nursing-Behälter (4) vorangeschalteten Dosierungsaggregat (7) zum Einstellen eines Soll-Gesamtvolumenstroms und/oder Soll-Gesamtmassenstroms des Saatguts (2).

**11.** System nach einem der Ansprüche 7 bis 10, wobei am Nursing-Behälter (4) wenigstens zwei insbesondere kapazitive Sensoren (8) zur Überwachung unterschiedlicher Füllstandniveaus im Nachfüllbereich (4a) angeordnet sind.

**12.** System nach einem der Ansprüche 7 bis 11, wobei die Steuerung (9) dazu ausgebildet ist, Drehzahlen der Säaggregate (6) beim Unterschreiten eines vorgegebenen Mindestfüllstands (FSM) im Nachfüllbereich (4a) zu senken und beim Überschreiten eines vorgegebenen Höchstfüllstands (FSH) im Nachfüllbereich (4a) zu erhöhen.

**13.** System nach einem der Ansprüche 7 bis 12, wobei am Nursing-Behälter (4) wenigstens ein Sensor (12) zur Radarmessung der Ist-Fließgeschwindigkeit (FGI) des Saatguts (2) im Nachfüllbereich (4a) angeordnet ist.

**14.** System nach einem der Ansprüche 7 bis 13, wobei die Steuerung (9) dazu ausgebildet ist, Drehzahlen der Säaggregate (6) beim Unterschreiten einer vorgegebenen Mindestfließgeschwindigkeit im Nachfüllbereich (4a) zu erhöhen und beim Überschreiten einer vorgegebenen Höchstfließgeschwindigkeit im Nachfüllbereich (4a) zu senken.

**15.** Sämaschine mit den Säaggregaten (6) zugeordneten Säscharen (11), und mit dem System nach wenigstens einem der Ansprüche 7 bis 14.

**Claims**

**1.** Method for metering seed (2) in a system according to one of Claims 7 to 14, wherein the seed (2) is replenished from a central storage container (3) into a nursing container (4) in particular by means of drop delivery and is distributed pneumatically there to a plurality of delivery lines (5) to a non-central sowing units (6), **characterized in that** an actual filling level (FSI) and/or an actual flow rate (FGI) of the seed (2) in the nursing container (4) is monitored on the inlet side, and the seed (2) is delivered by the sowing units (6) depending on the actual filling level (FSI) and/or the actual flow rate (FGI).

**2.** Method according to Claim 1, wherein:

- the flow rate of the seed (2) through the sowing units (6) is increased if a predefined highest filling level (FSH) of the seed (2) in the nursing container (4) is exceeded, and/or if a predefined minimum flow rate of the seed (2) and/or a corresponding total mass flow of the seed (2) through the nursing container (4) is dropped below; and
- the flow rate of the seed (2) through the sowing units (6) is decreased if a predefined minimum filling level (FSM) of the seed (2) in the nursing container (4) is dropped below, and/or if a predefined highest flow rate of the seed (2) and/or a corresponding total mass flow of the seed (2) through the nursing container is exceeded.

**3.** Method according to Claim 1 or 2, wherein an inlet-side setpoint total volumetric flow and/or setpoint total mass flow of the seed (2) into the nursing container (3) is set and in particular kept constant.

**4.** Method according to Claim 3, wherein control signals for adapting the speed of the sowing units (6) are generated on the basis of in particular capacitive filling level monitoring of a seed column (2a) in the nursing container (4) at at least two different filling levels.

**5.** Method according to Claim 1 or 2, wherein control signals for adapting the speed of the sowing units (6) are generated on the basis of the bulk density of the seed (2), a delivery cross-sectional area (A) in the monitoring region, and the actual flow rate (FGI).

**6.** Method according to method according to Claim 1 or 2, wherein a correlation between flow rate and mass flow of the seed (2) is determined by means of a calibration test, and control signals for adapting the speed of the sowing units (6) are generated on the basis of the correlation and the actual flow rate (FGI).

**7.** System (1, 1') for metering seed (2) in a seed drill, having a central storage container (3) for the seed (2) and non-central sowing units (6) for dispensing the seed (2), and having a central nursing container (4) having an inlet-side replenishment region (4a) for the seed (2) and an outlet-side distribution region (4b) for pneumatically distributing the seed (2) to delivery lines (5) leading to the sowing units (6), and at least one sensor (8, 12) for monitoring an actual filling level (FSI) and/or an actual flow rate (FGI) of the seed (2) in the replenishment region (4a), **characterized by** a controller (9) configured to non-centrally meter the seed (2), in particular to set the flow rate thereof through the sowing units (6), depending on the actual filling level (FSI)/the actual flow rate (FGI).

**8.** System according to Claim 7, wherein the replenishment region (4a) is in the form of a down pipe and/or is configured for the drop delivery of the seed (2).

**9.** System according to Claim 7 or 8, also having a fan (10) for generating a delivery air flow for the seed (2) in the distribution region (4b) and in the delivery lines (5).

**10.** System according to one of Claims 7 to 9, also having a metering unit (7), connected upstream of the nursing container (4), for setting a setpoint total volumetric flow and/or setpoint total mass flow of the seed (2).

**11.** System according to one of Claims 7 to 10, wherein at least two in particular capacitive sensors (8) for monitoring different filling levels in the replenishment region (4a) are arranged at the nursing container (4).

**12.** System according to one of Claims 7 to 11, wherein the controller (9) is configured to decrease speeds of the sowing units (6) if a predefined minimum filling level (FSM) in the replenishment region (4a) is dropped below and to increase them if a predefined highest filling level (FSH) in the replenishment region (4a) is exceeded.

**13.** System according to one of Claims 7 to 12, wherein at least one sensor (12) for radar measurement of the actual flow rate (FGI) of the seed (2) in the replenishment region (4a) is arranged at the nursing container (4).

**14.** System according to one of Claims 7 to 13, wherein the controller (9) is configured to increase speeds of the sowing units (6) if a predefined minimum flow rate in the replenishment region (4a) is dropped below and to decrease them if a predefined highest flow rate in the replenishment region (4a) is exceeded.

**15.** Seed drill having sowing coulters (11) assigned to the sowing units (6), and having the system according to at least one of Claims 7 to 14.


**Revendications**

**1.** Procédé de dosage de semences (2) dans un système selon l'une quelconque des revendications 7 à 14, dans lequel les semences (2) sont déversées à partir d'un réservoir central (3) dans un réservoir de nursing (4), en particulier au moyen d'un refoulement à force de gravité et y sont réparties pneumatiquement dans plusieurs conduites de transport (5) vers des organes semeurs décentralisés (6), **caractérisé en ce qu'**un niveau de remplissage actuel (FSI) et/ou une vitesse d'écoulement actuelle (FGI) des semences (2) dans le réservoir de nursing (4) est contrôlé(e) du côté de l'entrée et les semences (2) sont transportées par les organes semeurs (6) en fonction du niveau de remplissage actuel (FSI) et/ou de la vitesse d'écoulement actuelle (FGI).

**2.** Procédé selon la revendication 1, dans lequel :

- la vitesse d'écoulement des semences (2) à travers les organes semeurs (6) est augmentée si un niveau de remplissage maximal prédéfini (FSH) des semences (2) dans le réservoir de nursing (4) est dépassé, et/ou si on passe en dessous d'une vitesse d'écoulement minimale prédéfinie des semences (2) et/ou d'un débit massique total correspondant des semences (2) à travers le réservoir de nursing (4); et

- la vitesse d'écoulement des semences (2) à travers les organes semeurs (6) est abaissée si on passe en dessous d'un niveau de remplissage minimal prédéfini (FSM) des semences (2) dans le réservoir de nursing (4)et/ou si une vitesse d'écoulement maximale prédéfinie des semences (2) et/ou un débit massique total correspondant des semences (2) à travers le réservoir de nursing est dépassé(e).

3. Procédé selon la revendication 1 ou 2, dans lequel un débit volumique total de consigne du côté de l'entrée et/ou un débit massique total de consigne du côté de l'entrée des semences (2) dans le réservoir de nursing (4) est ajusté et est notamment maintenu constant.

4. Procédé selon la revendication 3, dans lequel des signaux de commande sont générés pour l'adaptation de la vitesse de rotation des organes semeurs (6), sur la base d'un contrôle notamment capacitif du niveau de remplissage d'une colonne de semences (2a) dans le réservoir de nursing (4) à au moins deux niveaux de remplissage différents.

5. Procédé selon la revendication 1 ou 2, dans lequel des signaux de commande sont générés pour l'adaptation de la vitesse de rotation des organes semeurs (6), sur la base de la densité en vrac des semences (2), d'une surface de transport en section transversale (A) dans la zone de surveillance et de la vitesse d'écoulement réelle (FGI).

6. Procédé selon procédé selon la revendication 1 ou 2, dans lequel une relation entre la vitesse d'écoulement et le débit massique des semences (2) est déterminée au moyen d'un contrôle de débit et des signaux de commande sont générés pour l'adaptation de la vitesse de rotation des organes semeurs (6) à l'aide de cette relation et de la vitesse d'écoulement réelle (FGI).

7. Système (1, 1') pour le dosage de semences (2) dans un semoir, comprenant un réservoir central (3) pour les semences (2) et des organes semeurs décentralisés (6) pour décharger les semences (2), et comprenant un réservoir de nursing central (4) avec une zone de remplissage (4a) du côté de l'entrée pour les semences (2) et une zone de distribution (4b) du côté de la sortie pour la distribution pneumatique des semences (2) vers des conduites de transport (5) conduisant aux organes semeurs (6), et au moins un capteur (8, 12) pour contrôler un niveau de remplissage actuel (FSI) et/ou une vitesse d'écoulement actuelle (FGI) des semences (2) dans la zone de remplissage (4a), **caractérisé par** une commande (9) configurée pour le dosage décentralisé des semences (2), en particulier pour l'ajustement de leur vitesse d'écoulement à travers les organes semeurs (6), en fonction du niveau de remplissage actuel (FSI)/de la vitesse d'écoulement réelle (FGI).

8. Système selon la revendication 7, dans lequel la zone de remplissage (4a) est réalisée sous forme de tuyau descendant et/ou est réalisée pour transporter les semences (2) sous l'effet de la force de pesanteur.

9. Système selon la revendication 7 ou 8, comprenant en outre une soufflante (10) pour générer un courant d'air de transport pour les semences (2) dans la zone de distribution (4b) et dans les conduites de transport (5).

10. Système selon l'une quelconque des revendications 7 à 9, comprenant en outre un organe de dosage (7) monté en amont du réservoir de nursing (4) pour ajuster un débit volumique total de consigne et/ou un débit massique total de consigne des semences (2).

11. Système selon l'une quelconque des revendications 7 à 10, dans lequel au moins deux capteurs notamment capacitifs (8) pour surveiller différents niveaux de remplissage dans la zone de remplissage (4a) sont disposés au niveau du réservoir de nursing (4).

12. Système selon l'une quelconque des revendications 7 à 11, dans lequel la commande (9) est réalisée de manière à abaisser les vitesses de rotation des organes semeurs (6) lors d'un passage en dessous d'un niveau de remplissage minimum prédéfini (FSM) dans la zone de remplissage (4a) et pour les augmenter lors d'un dépassement d'un niveau de remplissage maximal prédéfini (FSH) dans la zone de remplissage (4a).

13. Système selon l'une quelconque des revendications 7 à 12, dans lequel au moins un capteur (12) pour une mesure radar de la vitesse d'écoulement actuelle (FGI) des semences (2) dans la zone de remplissage (4a) est disposé au niveau du réservoir de nursing (4).

14. Système selon l'une quelconque des revendications 7 à 13, dans lequel la commande (9) est réalisée pour augmenter les vitesses de rotation des organes semeurs (6) lors d'un passage en dessous d'une vitesse d'écoulement minimale prédéfinie dans la zone de remplissage (4a) et pour les abaisser lors d'un dépassement d'une vitesse d'écoulement maximale prédéfinie dans la zone de remplissage (4a).

15. Semoir comprenant des socs de semoir (11) associés aux organes semeurs (6), et comprenant le système selon au moins l'une quelconque des revendications 7 à 14.

Fig.1

EP 3 440 909 B1

Fig.2

EP 3 440 909 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3150041 A1
- EP 2281426 A2
- EP 3150043 A1
- DE 10300542 A1